# EUROPEAN PATENT APPLICATION

(11) **EP 3 441 924 A1**
(43) Date of publication of application: **13.02.2019**
(21) Application number: 17820414.5
(22) Date of filing: 05.06.2017
(51) Int. Cl.: G06Q 20/32, G06Q 20/34, G06K 19/06, G06Q 30/02, G06Q 20/38, H04W 4/00, H04W 88/02

(54) **PAYMENT METHOD AND ELECTRONIC DEVICE FOR PERFORMING SAME**

(30) Priority: 29.06.2016 KR 20160081342
(71) Applicant: Samsung Electronics Co., Ltd., Suwon-si, Gyeonggi-do 16677 (KR)
(72) Inventor: KIM, Sung Wang, Seoul 06335 (KR); PARK, Chan Pyo, Seoul 08750 (KR); JIN, In Ji, Bucheon-si Gyeonggi-do 14602 (KR); YOU, Shin Young, Seoul 05668 (KR); LEE, Yoon Ho, Incheon 22003 (KR)
(74) Representative: HGF Limited
(86) International application number: PCT/KR2017/005837
(87) International publication number: WO 2018/004137

(57) **Abstract**

An electronic device includes a display, a payment module transmitting data associated with a payment transaction to an external device wirelessly, a processor electrically connected to the display and the payment module, and a memory electrically connected to the processor. The memory stores instructions that cause the processor to initiate transmission of payment data to the external device, in response to a predetermined event and to output an optically recognizable image including specified information to the display.

## Description

### [Technical Field]

The present disclosure relates to a payment method and an electronic device performing the same.

### [Background Art]

With the development of information technology (IT), an electronic device has significantly superior functions, and various functions may be provided to a user by using the electronic device. The electronic device provides the user with a multimedia service, for example, a music service, a video service, or a digital broadcast service, or a network-based communication service such as a call service, a wireless Internet service, a short message service (SMS), a multimedia messaging service (MMS), or the like.

Nowadays, financial technology (hereinafter referred to as "Fin-tech") that is a combination of a finance technology and the IT technology gets attention. The fin-tech evaluated as the financial paradigm shift extends its boundary to an off-line financial service and the building service of a finance platform as well as a conventional on-line financial service.

For example, manufacturers of electronic devices make various efforts to the building of a payment system platform, the spread of a mobile payment service, and the like through the cooperation of a credit card issuer or a bank.

### [Disclosure]

### [Technical Problem]

The present disclosure relates to an electronic device and a payment method used for a payment transaction, and more particularly, a method of providing information to be additionally used at the payment transaction together with payment data in an optically recognizable format, and an electronic device performing the same.

### [Technical Solution]

In accordance with an aspect of the present disclosure, an electronic device may include a display, a payment module transmitting data associated with a payment transaction to an external device wirelessly, a processor electrically connected to the display and the payment module, and a memory electrically connected to the processor. The memory may store instructions that cause the processor to initiate transmission of payment data to the external device, in response to a predetermined event and to output an optically recognizable image including specified information to the display.

In accordance with another aspect of the present disclosure, a payment method of an electronic device may include initiating a wireless transmission of payment data to an external device, in response to a predetermined event and outputting an optically recognizable image including specified information to a display.

In accordance with another aspect of the present disclosure, a storage medium may store instructions that cause a processor to initiate a wireless transmission of payment data to an external device, in response to a predetermined event and to output an optically recognizable image including specified information to a display.

### [Advantageous Effects]

According to various embodiments of the present disclosure, an optically recognizable image including discount information or the like may be output to a display at a mobile payment transaction. As such, a user may not only make a mobile payment transaction using an electronic device, but also substantially receive an additional discount service, a loyalty service, or the like at the same time. Besides, a variety of effects directly or indirectly understood through this disclosure may be provided.

### [Description of Drawings]

FIG. 1 illustrates an electronic device according to various embodiments.
FIG. 2 illustrates a block diagram of the electronic device, according to various embodiments.
FIG. 3 illustrates a block diagram of a program module according to various embodiments.
FIG. 4 illustrates an environment in which a payment transaction is made, according to various embodiments.
FIG. 5 illustrates a block diagram of an electronic device, according to an embodiment.
FIG. 6 is a flowchart of a payment method, according to an embodiment.
FIG. 7 is a view for describing a payment method, according to an embodiment.
FIG. 8 is a flowchart illustrating a payment method in which transmission duration of payment data is extended, according to an embodiment.
FIG. 9 is a view for describing extension of payment data transmission duration, according to an embodiment.
FIG. 10 is a flowchart illustrating a payment method in which an optically recognizable image is determined automatically, according to an embodiment.
FIG. 11 is a view for describing a payment method in which an optically recognizable image is determined automatically, according to an embodiment.
FIG. 12 is a flowchart illustrating a payment method of recommending an optically recognizable image automatically, according to an embodiment.
FIG. 13 is a view for describing a payment method of recommending an optically recognizable image automatically, according to an embodiment.
FIG. 14 is a flowchart illustrating a payment method in which an optically recognizable image is included in payment data, according to an embodiment.
FIG. 15 is a view for describing a payment method in which an optically recognizable image is included in payment data, according to an embodiment.

### [Mode for Invention]

Hereinafter, various embodiments of the present disclosure may be described with reference to accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar components may be marked by similar reference numerals.

In the present disclosure, the expressions "have", "may have", "include" and "comprise", or "may include" and "may comprise" used herein indicate existence of corresponding features (e.g., components such as numeric values, functions, operations, or parts) but do not exclude presence of additional features.

In the present disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in the present disclosure may be used to refer to various components regardless of the order and/or the priority and to distinguish the relevant components from other components, but do not limit the components. For example, "a first user device" and "a second user device" indicate different user devices regardless of the order or priority. For example, without departing the scope of the present disclosure, a first component may be referred to as a second component, and similarly, a second component may be referred to as a first component.

It will be understood that when an component (e.g., a first component) is referred to as being "(operatively or communicatively) coupled with/to" or "connected to" another component (e.g., a second component), it may be directly coupled with/to or connected to the other component or an intervening component (e.g., a third component) may be present. In contrast, when an component (e.g., a first component) is referred to as being "directly coupled with/to" or "directly connected to" another component (e.g., a second component), it should be understood that there are no intervening component (e.g., a third component).

According to the situation, the expression "configured to" used in the present disclosure may be used as, for example, the expression "suitable for", "having the capacity to", "designed to", "adapted to", "made to", or "capable of". The term "configured to" must not mean only "specifically designed to" in hardware. Instead, the expression "a device configured to" may mean that the device is "capable of" operating together with another device or other parts. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in the present disclosure are used to describe specified embodiments and are not intended to limit the scope of the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of the present disclosure. In some cases, even if terms are terms which are defined in the present disclosure, they may not be interpreted to exclude embodiments of the present disclosure.

An electronic device according to various embodiments of the present disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various embodiments, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ or PlayStation™), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automated teller machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of the present disclosure may not be limited to the above-described electronic devices and may include other electronic devices and new electronic devices according to the development of technologies.

Hereinafter, electronic devices according to various embodiments will be described with reference to the accompanying drawings. In the present disclosure, the term "user" may refer to a person who uses an electronic device or may refer to a device (e.g., an artificial intelligence electronic device) that uses the electronic device.

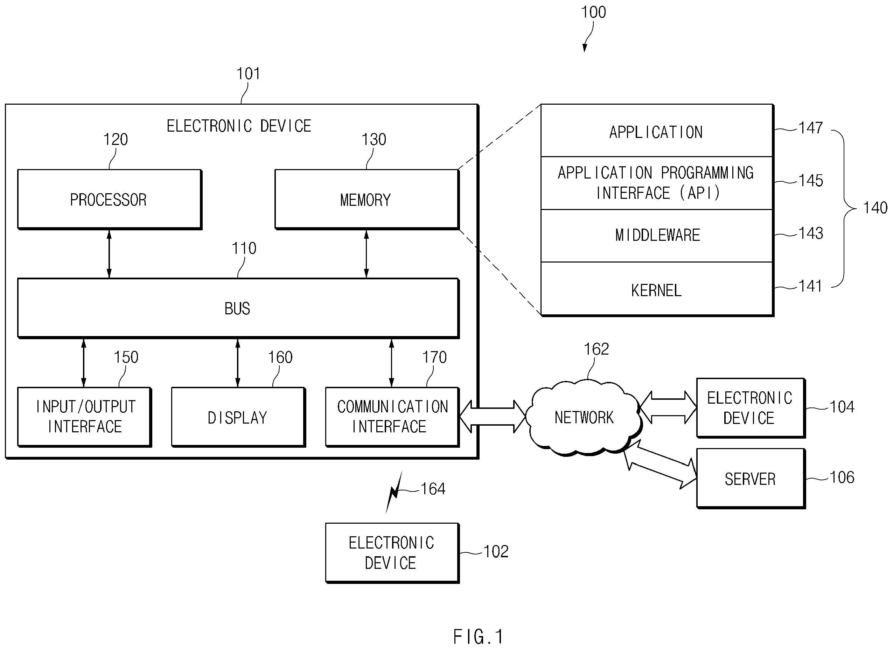

FIG. 1 illustrates an electronic device, according to various embodiments.

Referring to FIG. 1, according to various embodiments, an electronic device 101, 102, or 104, or a server 106 may be connected each other over a network 162 or a short range communication 164. The electronic device 101 may include a bus 110, a processor 120, a memory 130, an input/output interface 150, a display 160, and a communication interface 170. According to an embodiment, the electronic device 101 may not include at least one of the above-described components or may further include other component(s).

For example, the bus 110 may interconnect the above-described components 120 to 170 and may include a circuit for conveying communications (e.g., a control message and/or data) among the above-described components.

The processor 120 may include one or more of a central processing unit (CPU), an application processor (AP), or a communication processor (CP). For example, the processor 120 may perform an arithmetic operation or data processing associated with control and/or communication of at least other components of the electronic device 101.

The memory 130 may include a volatile and/or nonvolatile memory. For example, the memory 130 may store commands or data associated with at least one other component(s) of the electronic device 101. According to an embodiment, the memory 130 may store software and/or a program 140. The program 140 may include, for example, a kernel 141, a middleware 143, an application programming interface (API) 145, and/or an application program (or "an application") 147. At least a part of the kernel 141, the middleware 143, or the API 145 may be referred to as an "operating system (OS)".

For example, the kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete components of the electronic device 101 so as to control or manage system resources.

The middleware 143 may perform, for example, a mediation role such that the API 145 or the application program 147 communicates with the kernel 141 to exchange data.

Furthermore, the middleware 143 may process task requests received from the application program 147 according to a priority. For example, the middleware 143 may assign the priority, which makes it possible to use a system resource (e.g., the bus 110, the processor 120, the memory 130, or the like) of the electronic device 101, to at least one of the application program 147. For example, the middleware 143 may process the one or more task requests according to the priority assigned to the at least one, which makes it possible to perform scheduling or load balancing on the one or more task requests.

The API 145 may be, for example, an interface through which the application program 147 controls a function provided by the kernel 141 or the middleware 143, and may include, for example, at least one interface or function (e.g., an instruction) for a file control, a window control, image processing, a character control, or the like.

The input/output interface 150 may play a role, for example, of an interface which transmits a command or data input from a user or another external device, to other component(s) of the electronic device 101. Furthermore, the input/output interface 150 may output a command or data, received from other component(s) of the electronic device 101, to a user or another external device.

The display 160 may include, for example, a liquid crystal display (LCD), a light-emitting diode (LED) display, an organic LED (OLED) display, a microelectromechanical systems (MEMS) display, or an electronic paper display. The display 160 may display, for example, various contents (e.g., a text, an image, a video, an icon, a symbol, and the like) to a user. The display 160 may include a touch screen and may receive, for example, a touch, gesture, proximity, or hovering input using an electronic pen or a part of a user's body.

For example, the communication interface 170 may establish communication between the electronic device 101 and an external device (e.g., the first external electronic device 102, the second external electronic device 104, or the server 106). For example, the communication interface 170 may be connected to the network 162 over wireless communication or wired communication to communicate with the external device (e.g., the second external electronic device 104 or the server 106).

The wireless communication may include cellular communication using at least one of, for example, long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like. According to an embodiment, the wireless communication may include at least one of, for example, wireless fidelity (Wi-Fi), Bluetooth, Bluetooth Low Energy (BLE), Zigbee, near field communication (NFC), magnetic secure transmission, magnetic stripe transmission, radio frequency (RF), body area network (BAN), or a global navigation satellite system (GNSS).

The magnetic secure transmission or the magnetic stripe transmission may generate a pulse in response to transmission data using an electromagnetic signal, and the pulse may generate a magnetic field signal. The electronic device 101 may transfer the magnetic field signal to point of sale (POS), and the POS may detect the magnetic field signal using a magnetic secure transmission reader or a magnetic stripe transmission reader. The POS may recover the data by converting the detected magnetic field signal to an electrical signal. In the specification, the MST may be used to mean the magnetic secure transmission or the magnetic stripe transmission.

The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo") based on an available region, a bandwidth, or the like. Hereinafter, in the present disclosure, "GPS" and "GNSS" may be interchangeably used. The wired communication may include at least one of, for example, a universal serial bus (USB), a high definition multimedia interface (HDMI), a recommended standard-232 (RS-232), a plain old telephone service (POTS), or the like. The network 162 may include at least one of telecommunications networks, for example, a computer network (e.g., LAN or WAN), an Internet, or a telephone network.

Each of the first and second external electronic devices 102 and 104 may be a device of which the type is different from or the same as that of the electronic device 101. According to an embodiment, the server 106 may include a group of one or more servers. According to various embodiments, all or a portion of operations that the electronic device 101 will perform may be executed by another or plural electronic devices (e.g., the electronic device 102 or 104 or the server 106). According to an embodiment, in the case where the electronic device 101 executes any function or service automatically or in response to a request, the electronic device 101 may not perform the function or the service internally, but, alternatively additionally, it may request at least a portion of a function associated with the electronic device 101 from another device (e.g., the electronic device 102 or 104 or the server 106). The other electronic device (e.g., the electronic device 102 or 104 or the server 106) may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

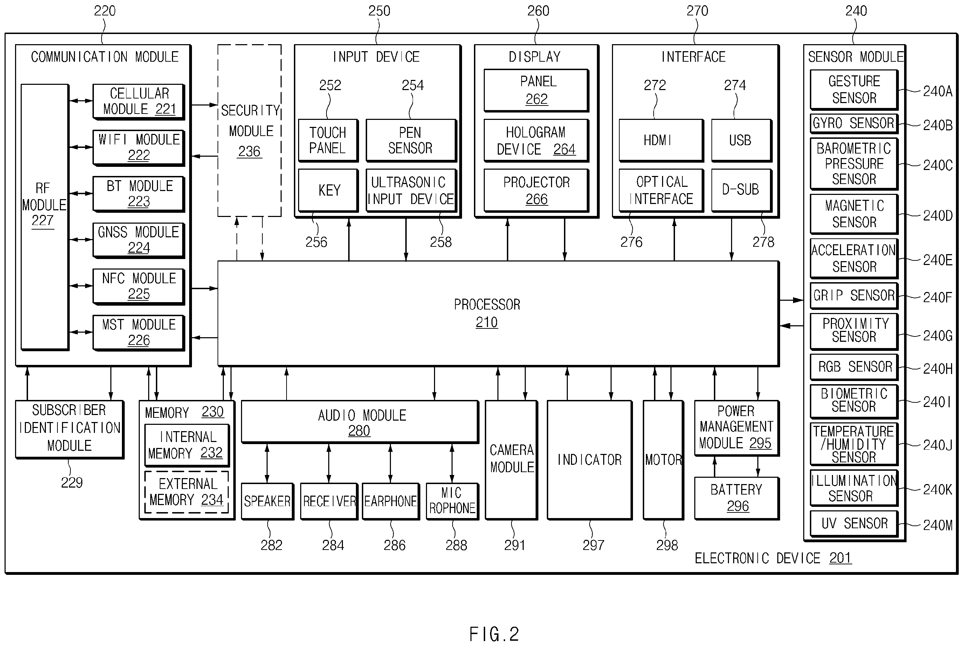

FIG. 2 illustrates a block diagram of an electronic device, according to various embodiments.

Referring to FIG. 2, an electronic device 201 may include, for example, all or a part of the electronic device 101 illustrated in FIG. 1. The electronic device 201 may include one or more processors (e.g., an application processor (AP)) 210, a communication module 220, a subscriber identification module 229, a memory 230, a sensor module 240, an input device 250, a display 260, an interface 270, an audio module 280, a camera module 291, a power management module 295, a battery 296, an indicator 297, and a motor 298.

The processor 210 may drive, for example, an operating system (OS) or an application to control a plurality of hardware or software components connected to the processor 210 and may process and compute a variety of data. For example, the processor 210 may be implemented with a System on Chip (SoC). According to an embodiment, the processor 210 may further include a graphic processing unit (GPU) and/or an image signal processor. The processor 210 may include at least a part (e.g., a cellular module 221) of components illustrated in FIG. 2. The processor 210 may load a command or data, which is received from at least one of other components (e.g., a nonvolatile memory), into a volatile memory and process the loaded command or data. The processor 210 may store a variety of data in the nonvolatile memory.

The communication module 220 may be configured the same as or similar to the communication interface 170 of FIG. 1. The communication module 220 may include the cellular module 221, a Wi-Fi module 222, a Bluetooth (BT) module 223, a GNSS module 224 (e.g., a GPS module, a Glonass module, a Beidou module, or a Galileo module), a near field communication (NFC) module 225, a MST module 226 and a radio frequency (RF) module 227.

The cellular module 221 may provide, for example, voice communication, video communication, a character service, an Internet service, or the like over a communication network. According to an embodiment, the cellular module 221 may perform discrimination and authentication of the electronic device 201 within a communication network by using the subscriber identification module (e.g., a SIM card) 229. According to an embodiment, the cellular module 221 may perform at least a portion of functions that the processor 210 provides. According to an embodiment, the cellular module 221 may include a communication processor (CP).

Each of the Wi-Fi module 222, the BT module 223, the GNSS module 224, the NFC module 225, or the MST module 226 may include a processor for processing data exchanged through a corresponding module, for example. According to an embodiment, at least a part (e.g., two or more) of the cellular module 221, the Wi-Fi module 222, the BT module 223, the GNSS module 224, the NFC module 225, or the MST module 226 may be included within one Integrated Circuit (IC) or an IC package.

For example, the RF module 227 may transmit and receive a communication signal (e.g., an RF signal). For example, the RF module 227 may include a transceiver, a power amplifier module (PAM), a frequency filter, a low noise amplifier (LNA), an antenna, or the like. According to another embodiment, at least one of the cellular module 221, the Wi-Fi module 222, the BT module 223, the GNSS module 224, the NFC module 225, or the MST module 226 may transmit and receive an RF signal through a separate RF module.

The subscriber identification module 229 may include, for example, a card and/or embedded SIM that includes a subscriber identification module and may include unique identify information (e.g., integrated circuit card identifier (ICCID)) or subscriber information (e.g., integrated mobile subscriber identity (IMSI)).

The memory 230 (e.g., the memory 130) may include an internal memory 232 or an external memory 234. For example, the internal memory 232 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 234 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 234 may be operatively and/or physically connected to the electronic device 201 through various interfaces.

A security module 236 may be a module that includes a storage space of which a security level is higher than that of the memory 230 and may be a circuit that guarantees safe data storage and a protected execution environment. The security module 236 may be implemented with a separate circuit and may include a separate processor. For example, the security module 236 may be in a smart chip or a secure digital (SD) card, which is removable, or may include an embedded secure element (eSE) embedded in a fixed chip of the electronic device 201. Furthermore, the security module 236 may operate based on an operating system (OS) that is different from the OS of the electronic device 201. For example, the security module 236 may operate based on java card open platform (JCOP) OS.

The sensor module 240 may measure, for example, a physical quantity or may detect an operation state of the electronic device 201. The sensor module 240 may convert the measured or detected information to an electric signal. For example, the sensor module 240 may include at least one of a gesture sensor 240A, a gyro sensor 240B, a barometric pressure sensor 240C, a magnetic sensor 240D, an acceleration sensor 240E, a grip sensor 240F, the proximity sensor 240G, a color sensor 240H (e.g., red, green, blue (RGB) sensor), a biometric sensor 240I, a temperature/humidity sensor 240J, an illuminance sensor 240K, or an UV sensor 240M. Although not illustrated, additionally or alternatively, the sensor module 240 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling at least one or more sensors included therein. According to an embodiment, the electronic device 201 may further include a processor that is a part of the processor 210 or independent of the processor 210 and is configured to control the sensor module 240. The processor may control the sensor module 240 while the processor 210 remains at a sleep state.

The input device 250 may include, for example, a touch panel 252, a (digital) pen sensor 254, a key 256, or an ultrasonic input unit 258. For example, the touch panel 252 may use at least one of capacitive, resistive, infrared and ultrasonic detecting methods. Also, the touch panel 252 may further include a control circuit. The touch panel 252 may further include a tactile layer to provide a tactile reaction to a user.

The (digital) pen sensor 254 may be, for example, a part of a touch panel or may include an additional sheet for recognition. The key 256 may include, for example, a physical button, an optical key, a keypad, or the like. The ultrasonic input device 258 may detect (or sense) an ultrasonic signal, which is generated from an input device, through a microphone (e.g., a microphone 288) and may check data corresponding to the detected ultrasonic signal. According to an embodiment, the touch panel 2352 may include a pressure sensor (or force sensor, interchangeably used hereinafter) that measures the intensity of touch pressure by a user. The pressure sensor may be implemented integrally with the touch panel 252, or may be implemented as at least one sensor separately from the touch panel 252.

The display 260 (e.g., the display 160) may include a panel 262, a hologram device 264, or a projector 266. The panel 262 may be the same as or similar to the display 160 illustrated in FIG. 1. The panel 262 may be implemented, for example, to be flexible, transparent or wearable. The panel 262 and the touch panel 252 may be integrated into a single module. The hologram device 264 may display a stereoscopic image in a space using a light interference phenomenon. The projector 266 may project light onto a screen so as to display an image. For example, the screen may be arranged in the inside or the outside of the electronic device 201. According to an embodiment, the panel 262 may include a pressure sensor (or a "force sensor") capable of measuring the intensity of pressure on the touch of the user. The pressure sensor may be integrated with the touch panel 252 or may be implemented with one or more sensors that are independent of the touch panel 252. According to an embodiment, the display 260 may further include a control circuit for controlling the panel 262, the hologram device 264, or the projector 266.

The interface 270 may include, for example, a high-definition multimedia interface (HDMI) 272, a universal serial bus (USB) 274, an optical interface 276, or a D-subminiature (D-sub) 278. The interface 270 may be included, for example, in the communication interface 170 illustrated in FIG. 1. Additionally or alternatively, the interface 270 may include, for example, a mobile high definition link (MHL) interface, a SD card/multi-media card (MMC) interface, or an infrared data association (IrDA) standard interface.

The audio module 280 may convert a sound and an electric signal in dual directions. At least a component of the audio module 280 may be included, for example, in the input/output interface 150 illustrated in FIG. 1. The audio module 280 may process, for example, sound information that is input or output through a speaker 282, a receiver 284, an earphone 286, or the microphone 288.

For example, the camera module 291 may shoot a still image or a video. According to an embodiment, the camera module 291 may include at least one or more image sensors (e.g., a front sensor or a rear sensor), a lens, an image signal processor (ISP), or a flash (e.g., an LED or a xenon lamp).

The power management module 295 may manage, for example, power of the electronic device 201. According to an embodiment, a power management integrated circuit (PMIC), a charger IC, or a battery or fuel gauge may be included in the power management module 295. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 296 and a voltage, current or temperature thereof while the battery is charged. The battery 296 may include, for example, a rechargeable battery and/or a solar battery.

The indicator 297 may display a specific state of the electronic device 201 or a part thereof (e.g., the processor 210), such as a booting state, a message state, a charging state, and the like. The motor 298 may convert an electrical signal into a mechanical vibration and may generate the following effects: vibration, haptic, and the like. Although not illustrated, a processing device (e.g., a GPU) for supporting a mobile TV may be included in the electronic device 201. The processing device for supporting the mobile TV may process media data according to the standards of digital multimedia broadcasting (DMB), digital video broadcasting (DVB), MediaFlo™, or the like.

Each of the above-mentioned components of the electronic device according to various embodiments of the present disclosure may be configured with one or more parts, and the names of the components may be changed according to the type of the electronic device. In various embodiments, the electronic device may include at least one of the above-mentioned components, and some components may be omitted or other additional components may be added. Furthermore, some of the components of the electronic device according to various embodiments may be combined with each other so as to form one entity, so that the functions of the components may be performed in the same manner as before the combination.

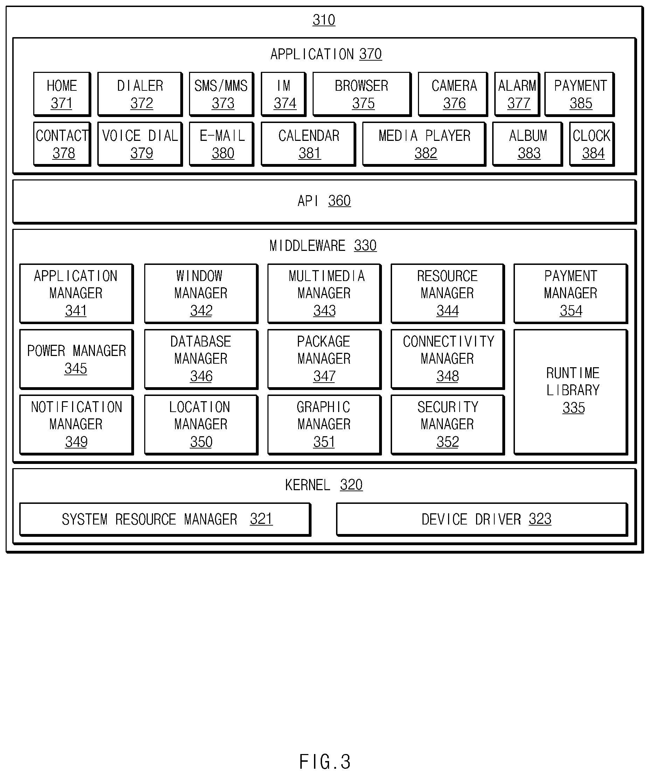

FIG. 3 illustrates a block diagram of a program module, according to various embodiments.

According to an embodiment, a program module 310 (e.g., the program 140) may include an operating system (OS) to control resources associated with an electronic device (e.g., the electronic device 101), and/or diverse applications (e.g., the application program 147) driven on the OS. The OS may be, for example, Android™, iOS™, Windows™, Symbian™, Tizen™, or bada.

The program module 310 may include a kernel 320, a middleware 330, an application programming interface (API) 360, and/or an application 370. At least a portion of the program module 310 may be preloaded on an electronic device or may be downloadable from an external electronic device (e.g., the electronic device 102 or 104, the server 106, or the like).

The kernel 320 (e.g., the kernel 141) may include, for example, a system resource manager 321 or a device driver 323. The system resource manager 321 may perform control, allocation, or retrieval of system resources. According to an embodiment, the system resource manager 321 may include a process managing unit, a memory managing unit, or a file system managing unit. The device driver 323 may include, for example, a display driver, a camera driver, a Bluetooth driver, a shared memory driver, a USB driver, a keypad driver, a Wi-Fi driver, an audio driver, or an inter-process communication (IPC) driver.

The middleware 330 may provide, for example, a function that the application 370 needs in common, or may provide diverse functions to the application 370 through the API 360 to allow the application 370 to efficiently use limited system resources of the electronic device. According to an embodiment, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, or a payment manager 354.

The runtime library 335 may include, for example, a library module that is used by a compiler to add a new function through a programming language while the application 370 is being executed. The runtime library 335 may perform input/output management, memory management, or capacities about arithmetic functions.

The application manager 341 may manage, for example, a life cycle of at least one application of the application 370. The window manager 342 may manage a graphic user interface (GUI) resource that is used in a screen. The multimedia manager 343 may identify a format necessary for playing diverse media files, and may perform encoding or decoding of media files by using a codec suitable for the format. The resource manager 344 may manage resources such as a storage space, memory, or source code of at least one application of the application 370.

The power manager 345 may operate, for example, with a basic input/output system (BIOS) to manage a battery or power, and may provide power information for an operation of an electronic device. The database manager 346 may generate, search for, or modify database that is to be used in at least one application of the application 370. The package manager 347 may install or update an application that is distributed in the form of package file.

The connectivity manager 348 may manage, for example, wireless connection such as Wi-Fi or Bluetooth. The notification manager 349 may display or notify an event such as arrival message, appointment, or proximity notification in a mode that does not disturb a user. The location manager 350 may manage location information about an electronic device. The graphic manager 351 may manage a graphic effect that is provided to a user, or manage a user interface relevant thereto. The security manager 352 may provide a general security function necessary for system security, user authentication, or the like. According to an embodiment, in the case where an electronic device (e.g., the electronic device 101) includes a telephony function, the middleware 330 may further include a telephony manager for managing a voice or video call function of the electronic device.

The middleware 330 may include a middleware module that combines diverse functions of the above-described components. The middleware 330 may provide a module specialized to each OS kind to provide differentiated functions. Additionally, the middleware 330 may dynamically remove a part of the preexisting components or may add new components thereto.

The API 360 (e.g., the API 145) may be, for example, a set of programming functions and may be provided with a configuration that is variable depending on an OS. For example, in the case where an OS is Android™ or iOS™, it may provide one API set per platform. In the case where an OS is Tizen™, it may provide two or more API sets per platform.

The application 370 (e.g., the application program 147) may include, for example, one or more applications capable of providing functions for a home 371, a dialer 372, an SMS/MMS 373, an instant message (IM) 374, a browser 375, a camera 376, an alarm 377, a contact 378, a voice dial 379, an e-mail 380, a calendar 381, a media player 382, an album 383, a timepiece 384, and a payment 385 or for offering health care (e.g., measuring an exercise quantity, blood sugar, or the like) or environment information (e.g., information of barometric pressure, humidity, temperature, or the like).

According to an embodiment, the application 370 may include an application (hereinafter referred to as "information exchanging application" for descriptive convenience) to support information exchange between an electronic device (e.g., the electronic device 101) and an external electronic device (e.g., the electronic device 102 or 104). The information exchanging application may include, for example, a notification relay application for transmitting specific information to an external electronic device, or a device management application for managing the external electronic device.

For example, the notification relay application may include a function of transmitting notification information, which arise from other applications (e.g., applications for SMS/MMS, e-mail, health care, or environmental information), to an external electronic device (e.g., the electronic device 102 or 104). Additionally, the notification relay application may receive, for example, notification information from an external electronic device and provide the notification information to a user.

The device management application may manage (e.g., install, delete, or update), for example, at least one function (e.g., turn-on/turn-off of an external electronic device itself (or a part) or adjustment of brightness (or resolution) of a display) of the external electronic device (e.g., the electronic device 102 or 104) which communicates with the electronic device, an application running in the external electronic device, or a service (e.g., a call service, a message service, or the like) provided from the external electronic device.

According to an embodiment, the application 370 may include an application (e.g., a health care application of a mobile medical device) that is assigned in accordance with an attribute of an external electronic device (e.g., the electronic device 102 or 104). According to an embodiment, the application 370 may include an application that is received from an external electronic device (e.g., the electronic device 102 or 104, or the server 106). According to an embodiment, the application 370 may include a preloaded application or a third party application that is downloadable from a server. The names of components of the program module 310 according to the embodiment may be modifiable depending on kinds of operating systems.

According to various embodiments, at least a portion of the program module 310 may be implemented by software, firmware, hardware, or a combination of two or more thereof. At least a portion of the program module 310 may be implemented (e.g., executed), for example, by the processor (e.g., the processor 210). At least a portion of the program module 310 may include, for example, modules, programs, routines, sets of instructions, processes, or the like for performing one or more functions.

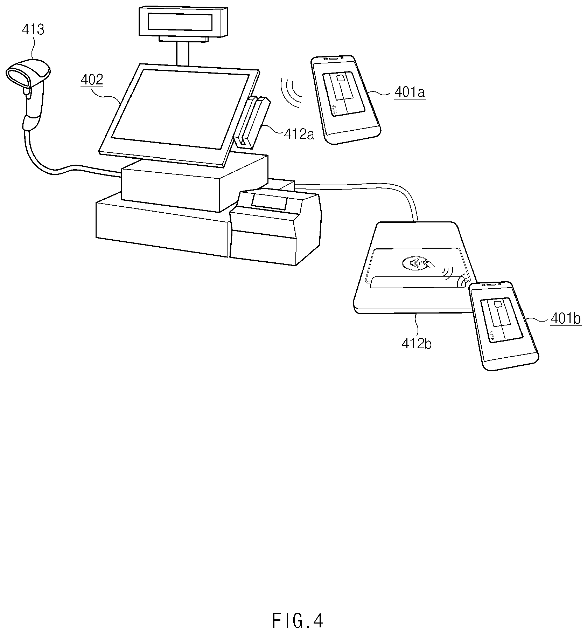

FIG. 4 illustrates an environment in which a payment transaction is made, according to various embodiments;

Referring to FIG. 4, an electronic device 401a or an electronic device 401b may interact with an external device 402 wirelessly. For example, each of the electronic devices 401a and 401b may correspond to a smartphone including a payment module, and the external device 402 may correspond to a point of sale (POS) terminal. The electronic devices 401a and 401b and the external device 402 may establish, for example, a security channel for a payment transaction process. The electronic devices 401a and 401b may transmit and/or receive data associated with payment transmission to and/or from the external device 402 through the established security channel.

According to an embodiment, the electronic device 401a and the external device 402 may communicate with each other through an MST channel. For example, when the user activates an MST module embedded in or externally coupled to the electronic device 401a, the electronic device 401a may generate and emit a magnetic field, which is modulated in a specified scheme and which includes payment data, by using the activated MST module. Afterward, when the electronic device 401a approaches a MST reader 412a included in the external device 402 to be closer than a specified distance (e.g., 1 - 5 cm), the payment data may be transmitted to the external device 402 through the emitted magnetic field.

Also, according to an embodiment, the electronic device 401b and the external device 402 may communicate with each other through an NFC channel. For example, if the user activates an NFC module embedded in or externally coupled to the electronic device 401b, the electronic device 401b may generate and emit an electric field (or electromagnetic field) of a specified frequency (e.g., 13.56 MHz) including payment data, by using the activated NFC module. Afterward, when the electronic device 401b approaches a NFC reader 412b included in the external device 402 to be closer than a specified distance (e.g., 10 cm), the payment data may be transmitted to the external device 402 through the emitted electric field (or an electromagnetic field).

The external device 402 may complete a payment transaction based on the payment data received from the electronic device 401a or the electronic device 401b. For example, the external device 402 may complete a payment transaction by interacting with a mobile payment service server and a payment server of a card issuer and/or a financial institution through an external network (e.g., a POS system network, an Internet, or the like).

According to various embodiments of the present disclosure, after or before transmitting the payment data to the external device 402, the electronic devices 401a and 401b may output an optically recognizable image (e.g., a bar code, or the like) including specified information, to a display. The optically recognizable image may be optically recognized (or read) by a reading device 413 (e.g., a bar code reader) of the external device 402. The external device 402 may extract the specified information included in the optically recognizable image and may transmit the extracted specified information to a relevant server or the like to provide a service (e.g., discount, loyalty, or the like) associated with the payment transaction to users of the electronic devices 401a and 401b.

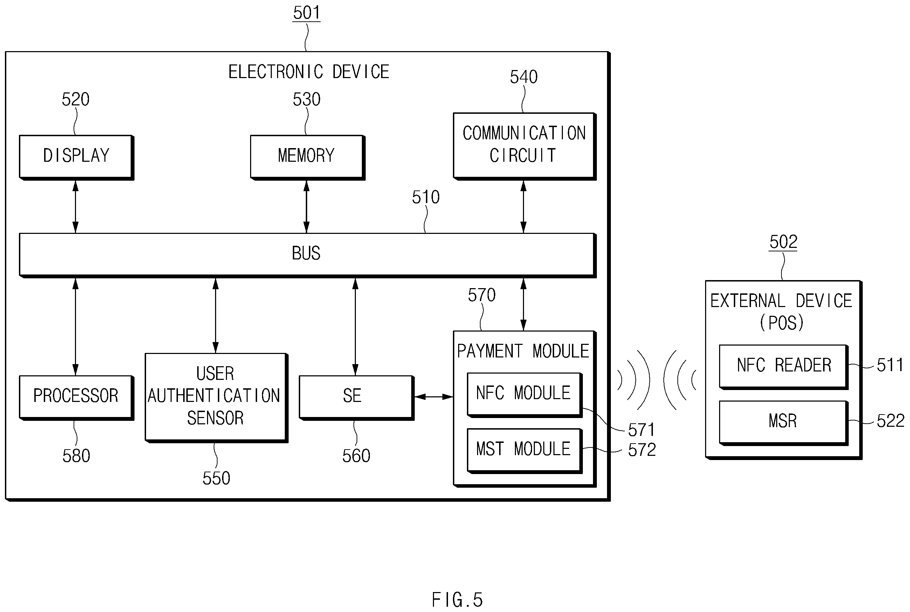

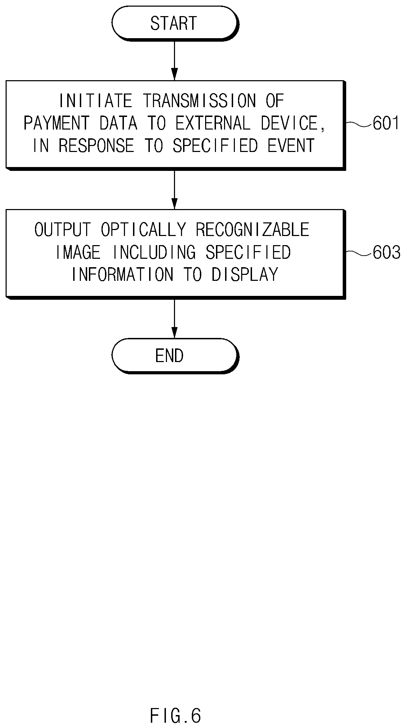

Below, a configuration of the electronic device 401a or the electronic device 401b according to an embodiment of the present disclosure will be described with reference to FIG. 5, and a payment method according to various embodiments of the present disclosure will be described with reference to FIGS. 6 to 15.

FIG. 5 illustrates a block diagram of an electronic device, according to an embodiment.

Referring to FIG. 5, an electronic device 501 that makes a payment with an external device 502 (e.g., a POS terminal, an electronic device supporting a person-to-person payment or person-to-person remittance) may include, for example, a bus 510, a display 520, a memory 530, a communication circuit 540, a user authentication sensor 550, a security element (SE) 560, a payment module 570, and/or a processor 580. For example, the electronic device 501 may correspond to each of the electronic device 401a and 401b illustrated in FIG. 4. The external device 502 may correspond to the external device 402 of FIG. 4. In addition, with regard to the configurations of the electronic device 501 and the external device 502, a description that is the same as described with reference to FIGS. 1 to 3 may not be repeated here.

For example, the bus 510 may electrically interconnect the elements 520 to 580 of the electronic device 501. The bus 510 may include a circuit that transfers a communication message (e.g., a control message and/or data) between elements.

The display 520 may display various content (e.g., a text, an image, a video, an icon, an object, a symbol, or the like) under control of the processor 580. The display 520 may include a touch screen and may receive, for example, a touch, gesture, proximity, or hovering input using an electronic pen or a part of a user's body.

The memory 530 may be electrically connected with the processor 580 and may store a command or data that is associated with operations of the components 520 and 540 to 580 included in the electronic device 501. For example, the memory 530 may store instructions that, when executed, cause the processor 580 to perform various operations (e.g., refer to FIGS. 6 to 15) disclosed in this specification. After the instructions are implemented with, for example, software such as an application program, an operating system (OS), or firmware, the instructions may be stored in the memory 530 or may be embedded in hardware.

The communication circuit 540 may communicate with the electronic device 501 and other devices (e.g., servers) over a wired/wireless network. For example, the communication circuit 540 may establish communication with a server, a mobile payment service server, or the like, which manages specified information according to an embodiment of the present disclosure.

The user authentication sensor 550 may detect or receive authentication information from a user. The processor 580 may compare the detected or received authentication information with authentication information registered in the memory 530. When authenticating a bona fide user based on the comparison result, the processor 580 may obtain the corresponding authentication as a predetermined event. According to various embodiments, the user authentication sensor 550 may authenticate a user by using the computing resource of the embedded controller IC.

For example, the user authentication sensor 550 may include a biometric sensor such as a fingerprint sensor, an iris sensor, or a vein sensor. For another example, the user authentication sensor 550 may include a touch screen for personal identification number (PIN) authentication; in addition, the user authentication sensor 550 may include a camera and an image processor for face authentication and a microphone and a voice processor for voice authentication.

For example, the SE 560 may correspond to a storage area protected according to a predetermined security policy. The SE 560 may be connected to the payment module 570 through the bus 510 or directly. The SE 560 may include various data (i.e., payment data) for making a payment with an external payment device. For example, the payment data may include at least one of a primary account number (PAN) corresponding to card information connected with a financial account, a token with the security improved by replacing the PAN, and/or a cryptogram. For example, the token may comply with Europay Mastercard and Visa (EMV) tokenization standard.

For example, the SE 560 may be implemented with an independent storage module (e.g., the security module 236 of FIG. 2, an embedded SE (eSE), a universal IC card (UICC), an embedded UICC (eUICC), a micro secure digital (SD) card, a subscriber identification module (SIM) card, or the like), or the like.

The payment module 570 may wirelessly transmit and/or receive data for the payment transaction to and/or from the external device 502. The payment module 570 may include a local wireless communication circuit. For example, the payment module 570 may transmit payment data stored in the SE 560 to the external device 502 through a specified wireless channel (e.g., an NFC channel, an MST channel, or the like). For another example, the electronic device 501 may receive the completion message of the payment transaction from the external device 502 through the payment module 570. According to various embodiments, the completion message of the payment transaction may be received from a payment server (e.g., a payment processing server of a card issuer and/or a financial institution) through the communication circuit 540.

In the meantime, the payment module 570 is illustrated in FIG. 5 as being embedded in the electronic device 501. However, according to various embodiments, the payment module 570 may be implemented with a dedicated device and may be electrically coupled with the electronic device 501 through a specified interface (e.g., a 3.5mm earphone terminal, a USB terminal, or the like).

According to an embodiment, the payment module 570 may include an NFC module 571 and an MST module 572. The payment module 570 is described in FIG. 5 as including the NFC module 571 and the MST module 572, but embodiments are not limited thereto. For example, the payment module 570 may include a payment module using a RFID tag.

The NFC module 571 may include, for example, an NFC controller (or an NFC driver) and an RF module driven by the NFC controller. The NFC controller may convert payment data stored in the SE 560 into an electrical signal and may transfer the electrical signal to the RF module. The RF module may transmit and receive payment data or any other data to and from the external device 502 in an electromagnetic induction manner, based on the electrical signal received from the NFC controller, for example.

For example, the MST module 572 may include an MST controller (or an MST driver) and an inductor driven by the MST controller. The MST controller may convert the payment data stored in the SE 560 into an electrical signal (e.g., a pulse stream) and may transfer the electrical signal to the inductor. The inductor may generate magnetic field fluctuations (e.g., magnetic impulses) modulated in a specified scheme based on the electrical signal received from the MST controller and may transmit payment data or any other data to the external device 502 through the magnetic field fluctuations. According to various embodiments, the MST module 572 may be referred to as a "magnetic secure transmission module" or "magnetic stripe transmission module".

For example, the processor 580 may be electrically connected with the components 510 to 570 included in the electronic device 501 and may execute operations or data processing associated with control and/or communication of the components 510 to 570 included in the electronic device 501.

According to an embodiment, the processor 580 may execute (or launch) a payment application (e.g., "Samsung Pay™", "Apple Pay™") for a payment transaction according to various embodiments of the present disclosure. A specified GUI may be output to the display 520 by the execution of the payment application.

According to an embodiment, the processor 580 may initiate the transmission of the payment data to the external device 502, in response to a predetermined event. For example, the predetermined event may include a user input through a GUI output to the display 520, the successful authentication (e.g., fingerprint authentication, PIN authentication, face authentication, voice authentication, or the like) of the user, or an input for a specified physical key or soft key. The processor 580 may output an optically recognizable image including specified information to the display 520.

According to various embodiments, the operations of the processor 580 do not care about order. For example, after initiating the transmission of the payment data, the processor 580 may output the optically recognizable image to the display 520; alternatively, after outputting the optically recognizable image to the display 520, the processor 580 may initiate the transmission of the payment data.

According to an embodiment, the optically recognizable image output to the display 520 may be determined in various manners. For example, the optically recognizable image may be determined (or selected) based on a user input.

For another example, the processor 580 may determine the optically recognizable image based on identification information of the external device 502, which is included in a payment completion message received from the external device 502 or a payment server (not illustrated) (e.g., the payment server of a card issuer and/or a financial institution). For example, the completion message of the payment transaction may include the identification information of the external device 502 performing the payment transaction; additionally or selectively, the completion message of the payment transaction may additionally include the transaction amount of the payment transaction or the transaction time of the payment transaction. The identification information of the external device 502 may include the name of a merchant in which the corresponding external device 502 is installed, the serial number of the external device 502, and the like.

For example, the optically recognizable image may include a one-dimensional bar code, a two-dimensional bar code, or a quick response (QR) code. The specified information included (specified) in the optically recognizable image may include at least one of discount (or offers) information, loyalty information, member information (e.g., member ID), or membership information (e.g., membership ID).

According to an embodiment, after receiving the completion message of the payment transaction from the external device 502 or a payment server, the processor 580 may further output another optically recognizable image to the display 520 based on identification information of the external device 502 included in the completion message. As such, the electronic device 501 may recommend or provide an additional optically recognizable image to a user later.

According to an embodiment, the processor 580 may extend the transmission duration of a payment data through the payment module 570 by a specified time under a specific condition. The transmission duration of the payment data may be limited to, for example, less than one minute or several tens of seconds, depending on the limitations of the mobile payment service.

For example, when the optically recognizable image is output, the processor 580 may extend the transmission duration of the payment data by a specified time. For another example, when a user input (e.g., touch, gesture, proximity, or hovering) for the optically recognizable image is sensed, the processor 580 may extend the transmission duration of the payment data by a specified time (e.g., about 10 seconds or more).

For another example, when the optically recognizable image is recognized by the external device 502, information (e.g., discount information, loyalty information, or the like) included in the recognized image may be transmitted to a server that manages the corresponding information from the external device 502. When receiving the information, the server may provide a service corresponding to the information and may transmit an acknowledgement (ACK) message to the electronic device 501. When receiving the ACK message, the processor 580 of the electronic device 501 may extend the transmission duration of the payment data by a specified time. The ACK message does not need to have the substance of "ACK". For example, the ACK message may include all messages, which are transmitted from the server to the electronic device 501 after the corresponding service is provided.

According to an embodiment, information (e.g., discount information, loyalty information, or the like) included in the optically recognizable image may be included in the payment data. For example, the processor 580 may configure the payment data such that the specified information is included in the payment data. For example, information included in the optically recognizable image may be included in a discretionary field of the payment data. Afterward, the processor 580 may transmit payment data including the information to the external device 502 through the payment module 570.

The above-described operations of the processor 580 are, but are not limited to, an example. For example, operations of a processor described in other parts of this specification should be understood as operations of the processor 580. Also, in this specification, at least some of operations described as operations of an "electronic device" should be understood as operations of the processor 580.

In the meantime, the external device 502 may include, for example, a POS terminal installed in a merchant or an electronic device supporting a person-to-person payment or person-to-person remittance. The external device 502 may complete a payment transaction based on the payment data received from the electronic device 501.

According to an embodiment, the external device 502 may include a module for wirelessly transmitting and/or receiving data (e.g., payment data) associated with the payment transaction to and/or from the electronic device 501. For example, the external device 502 may include an NFC reader 511 corresponding to the NFC module 571 of the electronic device 501 and/or an MSR (magnetic stripe reader or magnetic secure reader) 522 corresponding to the MST module 572 of the electronic device 501. Although illustrated in FIG. 5, the external device 502 may further include a communication circuit for connection with a network, a processor for processing a payment transaction, and the like in addition to the above-described elements.

According to an embodiment, the NFC reader 511 may transmit and receive data associated with the payment transaction to and from the electronic device 501 in an electromagnetic induction manner. For example, the NFC reader 511 may restore the payment data received from the NFC module 571 of the electronic device 501 to an electrical signal and may perform and complete a payment transaction process based on the electrical signal.

According to an embodiment, the MSR 522 may receive data associated with a payment transaction by detecting magnetic field fluctuations generated by the MST module 572 of the electronic device 501. For example, the MSR 522 may restore the payment data received from the MST module 572 of the electronic device 501 to an electrical signal and may perform and complete a payment transaction process based on the electrical signal.

The external device 502 may complete a payment transaction by interacting with a mobile payment service server and a payment server of a card issuer and/or a financial institution through an external network (e.g., a POS system network, an Internet, or the like). For example, the mobile payment service server may include a server (e.g., a token service provider (TSP) server) that manages information such as a token, a cryptogram, or the like, which is associated with a payment application. Also, for example, the payment server of a card issuer and/or a financial institution may include a server (e.g., a trusted service manager (TSM) server) that manages a financial account of the user.

FIG. 6 is a flowchart of a payment method, according to an embodiment.

Referring to FIG. 6, the payment method according to an embodiment may include operation 601 and operation 603. For example, operation 601 and operation 603 may be executed by the electronic device 501 illustrated in FIG. 5. For example, operation 601 and operation 603 may be respectively implemented with instructions capable of being performed (or executed) by the processor 580 of the electronic device 501. The instructions may be stored in, for example, a computer-readable recording medium or the memory 530 of the electronic device 501 illustrated in FIG. 5. Below, the reference numerals of FIG. 5 may be used to describe operation 601 and operation 603.

In operation 601, the processor 580 of the electronic device 501 may initiate the wireless transmission of payment data to an external device, in response to a predetermined event. For example, the predetermined event may include a user input through a GUI output to the display 520, the successful authentication (e.g., fingerprint authentication, PIN authentication, face authentication, voice authentication, or the like) of the user, or an input for a specified physical key or soft key.

In operation 603, an optically recognizable image including specified information may be output to the display 520. For example, the optically recognizable image may be determined (or selected) based on a user input or may be selected in advance. For another example, the optically recognizable image may be correlated to the payment data. In this case, the memory 530 of the electronic device 501 may store the correlation between the payment data and the optically recognizable image in the format of a look-up table (LUT).

For example, the optically recognizable image may include a one-dimensional bar code, a two-dimensional code, or a QR code. The specified information included in the optically recognizable image may include at least one of discount information, loyalty information, or member information.

An embodiment is exemplified in FIG. 6 as operation 603 is performed after operation 601 is performed. However, the operations do not care about order. According to various embodiments, for example, operation 601 may be performed after operation 603 is performed first.

According to an embodiment described in FIG. 6, at the payment transaction between the electronic device 501 and the external device 502, the optically recognizable image including discount information or the like may be output to the display 520. For example, the output image may be optically recognized by the bar code reader of the external device 502. As such, a user may not only make a payment transaction using the electronic device 501, but also receive an additional discount service, a loyalty service, or the like substantially at the same time.

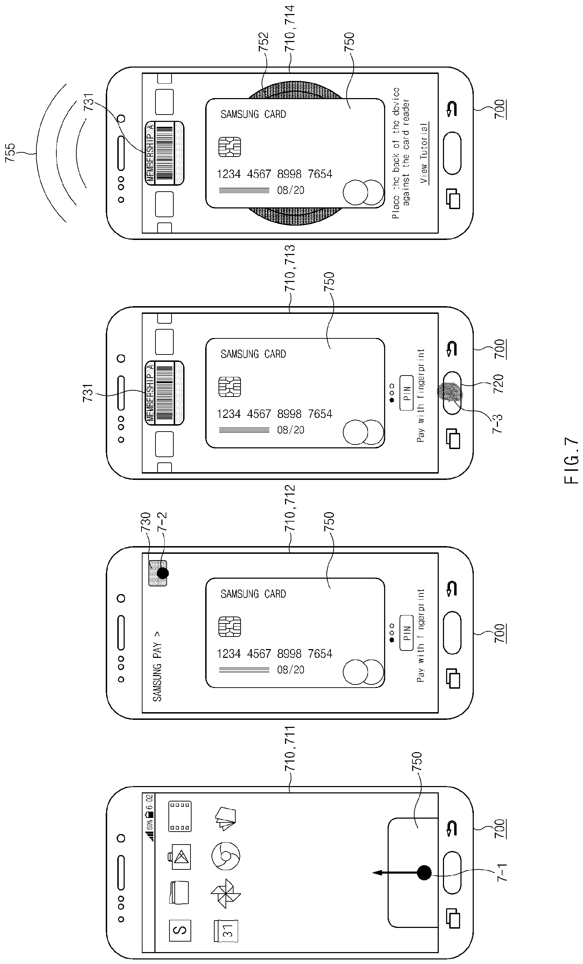

FIG. 7 is a view for describing a payment method, according to an embodiment.

Referring to FIG. 7, an electronic device 700 that performs a payment method is illustrated. For example, the electronic device 700 may correspond to the electronic device 501 of FIG. 5.

According to an embodiment, a screen 711 may be output in a display 710 of the electronic device 700. Referring to the screen 711, the electronic device 700 may execute or launch a payment application (e.g., "Samsung Pay™") in response to a user input 7-1. For example, the user input 7-1 may include a touch swipe from the boundary of the lower end of the display 710 of the electronic device 700. A specified image object 750 (e.g., an image object of a credit card) may be output to the display 710 in response to the user input 7-1, and the specified image object 750 may move along a path of the user input 7-1. Meanwhile, although not illustrated in FIG. 7, the user input 7-1 may be replaced with a voice input, the selection of a specified application icon, or the like.

According to an embodiment, the electronic device 700 may output a GUI screen 712 for the payment transaction to the display 710 based on the execution of the payment application. For example, the screen 712 may include the image object 750 of a credit card and a specified object 730. The image object 750 of the credit card may be linked to the payment data of the corresponding credit card and may be switched to an image object of another credit card in response to an additional user input (e.g., horizontal scrolling) (not illustrated). The specified object 730 may correspond to a function object for outputting the optically recognizable image to the display 710. For example, when a user input 7-2 is performed, a screen 713 may be output to the display 710.

According to an embodiment, when the user input 7-2 is performed, the electronic device 700 may output the GUI screen 713 to the display 710. For example, the electronic device 700 may output a bar code 'A' 731 for membership 'A' to the display 710 in response to the user input 7-2 for the specified object 730. The bar code 'A' 731 may be recognized by a bar code reader included in an external device such that a user receives a service for membership 'A'. According to various embodiments, the bar code 'A' 731 may be switched to another optically recognizable image in response to an additional user input (e.g., horizontal scrolling) (not illustrated).

Afterward, the user may perform a fingerprint input 7-3 on a home button 720 including a fingerprint sensor. The electronic device 700 may authenticate the user based on a fingerprint input 7-3. When the user is successfully authenticated, the electronic device 700 may detect the corresponding authentication as an event associated with payment initiation.

According to an embodiment, when the user is authenticated, that is, when the event associated with the payment initiation is detected, the electronic device 700 may output a GUI screen 714 to the display 710. The electronic device 700 may generate a wireless channel 755 (e.g., the electromagnetic field by an NFC module, the magnetic field by an MST module) and may transmit payment data to an external device (e.g., a POS terminal) through the wireless channel 755, in response to the event associated with the payment initiation. At this time, the electronic device 700 may output a graphic indicator 752 indicating the transmission of the payment data to the display 710. The transmitted payment data may correspond to the payment data of the corresponding credit card linked to the image object 750 of a credit card. The external device may complete a payment transaction by communicating with a payment server or the like, based on the payment data received from the electronic device 700.

An embodiment is exemplified in FIG. 7 as the screens 711 to 714 are described sequentially. However, embodiments are not limited thereto. For example, the screen 713 may be output at once in response to the user input 7-1 of the screen 711 (i.e., the screen 712 may be omitted). In this case, the electronic device 700 may be set in advance such that the bar code 'A' 731 is output to the display 710 together with the image object 750 of a credit card. In addition, only a single bar code 'A' may be outputted to the screens 713 and 714. However, according to various embodiments, a plurality of bar codes may be output to the screens 713 and 714.

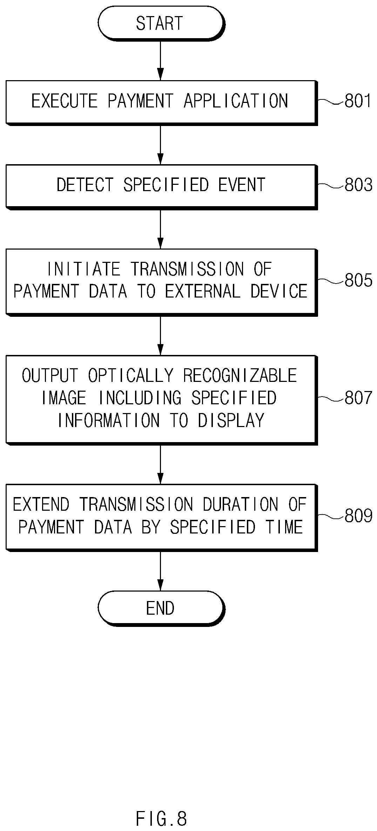

FIG. 8 is a flowchart illustrating a payment method in which transmission duration of payment data is extended, according to an embodiment.

Referring to FIG. 8, the payment method according to an embodiment may include operation 801 to operation 809. Operation 801 to operation 809 may be performed by, for example, the electronic device 501 illustrated in FIG. 5. Operation 801 to operation 809 may be respectively implemented with, for example, instructions capable of being performed (or executed) by the processor 580 of the electronic device 501. The instructions may be stored in, for example, a computer-readable recording medium or the memory 530 of the electronic device 501 illustrated in FIG. 5. Below, operation 801 to operation 809 will be described by using the reference numerals of FIG. 5.

In operation 801, the processor 580 of the electronic device 501 may execute or launch a payment application (e.g., "Samsung Pay™"). A GUI for a payment transaction may be output in the display 520 by the execution of the payment application.

In operation 803, the processor 580 may detect a predetermined event. For example, the predetermined event may include a user input through a GUI output to the display 520, the successful authentication (e.g., fingerprint authentication, PIN authentication, face authentication, voice authentication, or the like) of the user, or an input for a specified physical key or soft key.

In operation 805, the processor 580 may initiate the wireless transmission of payment data to the external device 502, by using the payment module 570. For example, the payment data may include at least one of a PAN corresponding to card information connected with a financial account, a token with the security improved by replacing the PAN, and/or a cryptogram. Moreover, the wireless transmission may include the transmission using an NFC wireless channel, an MST wireless channel, or the like.

In operation 807, the processor 580 may output an optically recognizable image including specified information to the display 520. For example, the optically recognizable image may include a one-dimensional bar code, a two-dimensional code, or a QR code. The specified information included in the optically recognizable image may include at least one of discount information, loyalty information, or member information.

In operation 809, the processor 580 may extend the transmission duration of the payment data, which is initiated in operation 805, by a specified time. This is to prevent the transmission duration of the payment data from being terminated, while the external device 502 recognizes the optically recognizable image.

For example, when the optically recognizable image is output to the display 520 in operation 807, the processor 580 may extend the transmission duration of the payment data by a specified time. For another example, when a user input for the optically recognizable image is sensed, the processor 580 may extend the transmission duration of the payment data by a specified time. For another example, when receiving an ACK message from a server managing the specified information through the communication circuit 540, the processor 580 may extend the transmission duration of the payment data by a specified time.

A triggering condition of extending the transmission duration of the payment data is not limited to the examples. For example, when sensing that the optically recognizable image is recognized by the external device 502, the processor 580 may extend the transmission duration of the payment data. In this case, the processor 580 may detect that the bar code reader of the external device 502 reads the optically recognizable image, by using a proximity sensor, an infrared sensor, or the like. For another example, the processor 580 may detect the sound generated when the bar code reader of the external device 502 reads the optically recognizable image, by using a microphone and thus may recognize that the corresponding image is read.

According to an embodiment described in FIG. 8, at the payment transaction between the electronic device 501 and the external device 502, the optically recognizable image including discount information or the like may be output to the display 520. In this case, the electronic device 501 may extend the transmission duration of the payment data in consideration of a time during which the image is recognized by an external device. As such, a mobile payment may be provided seamlessly together with an additional discount service, a loyalty service, or the like.

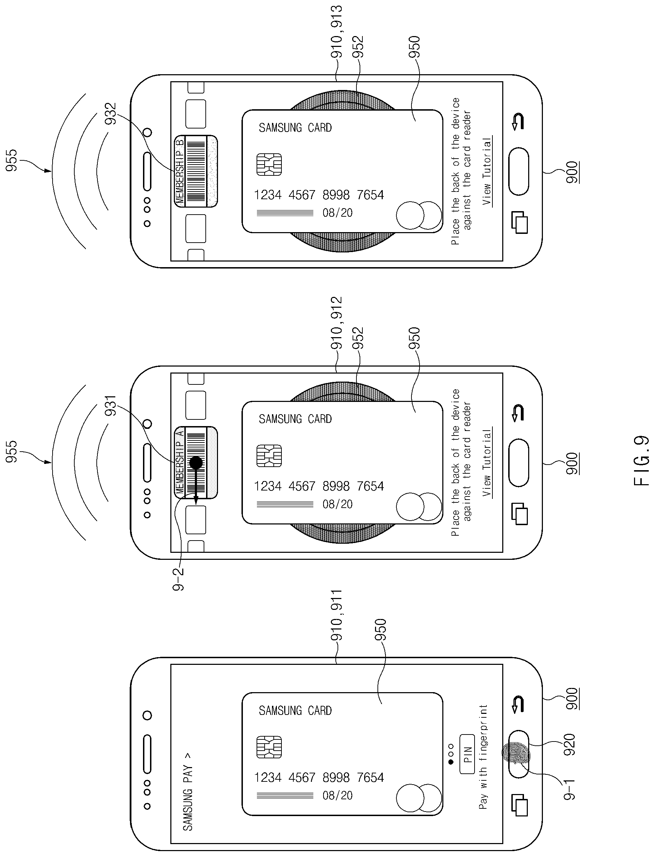

FIG. 9 is a view for describing extension of payment data transmission duration, according to an embodiment.

Referring to FIG. 9, an electronic device 900 that performs a payment method is illustrated. For example, the electronic device 900 may correspond to the electronic device 501 of FIG. 5. The description repeated with respect to FIG. 7 may be omitted.

According to an embodiment, the electronic device 900 may output a GUI screen 911 for the payment transaction to a display 910 based on the execution or launch of the payment application (e.g., "Samsung Pay™"). For example, the screen 911 may include an image object 950 of a credit card. The image object 950 of the credit card may be linked to the payment data of the corresponding credit card and may be switched to an image object of another credit card in response to an additional user input (e.g., horizontal scrolling) (not illustrated).

According to an embodiment, a user may perform a fingerprint input 9-1 by using a home button 920 including a fingerprint sensor. The electronic device 900 may authenticate a user based on the fingerprint input 9-1. When the user is successfully authenticated, the electronic device 900 may detect the corresponding authentication as an event associated with payment initiation. When the user is authenticated, that is, when the event associated with payment initiation is detected, the electronic device 900 may output a GUI screen 912 to the display 910.

Referring to the screen 912, the electronic device 900 may generate a wireless channel 955 (e.g., the electromagnetic field by an NFC module, the magnetic field by an MST module) and may transmit payment data to an external device (e.g., a POS terminal) through the wireless channel 955, in response to the event associated with the payment initiation. At this time, the electronic device 900 may output a graphic indicator 952 indicating the transmission of the payment data linked to the image object 950 of the credit card, to the display 910. Furthermore, the electronic device 900 may output a bar code 'A' 931 for membership 'A' together with the image object 950 of the credit card, to the display 910.

According to an embodiment, when the bar code 'A' 931 is output to the display 910, the electronic device 900 may extend the transmission duration of the payment data, that is, the duration of the wireless channel 955 by a specified time. For another example, when receiving a specific ACK message from a server managing information about membership 'A' included in the bar code 'A' 931, the electronic device 900 may extend the transmission duration of the payment data by a specified time.

According to an embodiment, as illustrated in a screen 913, the electronic device 900 may output a bar code 'B' 932 for membership 'B' to the display 910 in response to a user input 9-2 (e.g., horizontal scrolling) for the bar code 'A' 931 illustrated in the screen 912. The user may select payment data, a merchant equipped with an external device, or an image (bar code), which is the most suitable for the purchase item of the payment transaction, through the user input 9-2. For example, when the user input 9-2 for the bar code 'A' 931 is sensed, the electronic device 900 may extend the transmission duration of the payment data by a specified time.

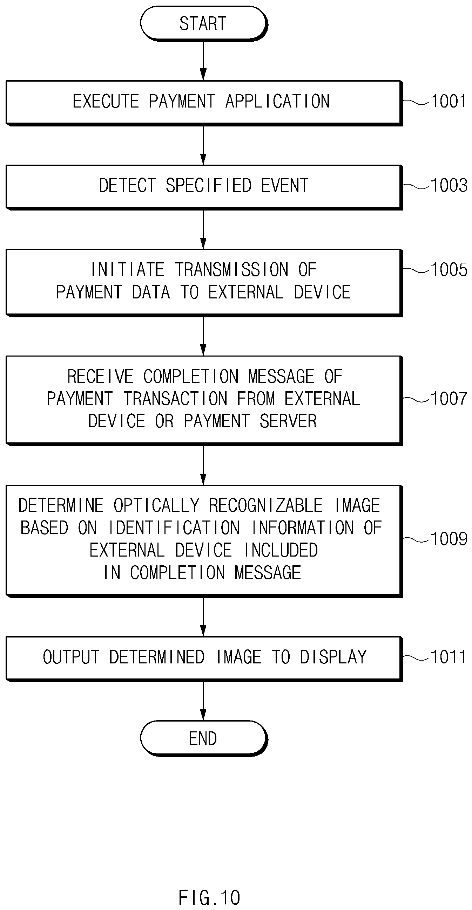

FIG. 10 is a flowchart illustrating a payment method in which an optically recognizable image is determined automatically, according to an embodiment.

Referring to FIG. 10, the payment method according to an embodiment may include operation 1001 to operation 1011. Operation 1001 to operation 1011 may be executed by, for example, the electronic device 501 illustrated in FIG. 5. Operation 1001 to operation 1011 may be respectively implemented with, for example, instructions capable of being performed (or executed) by the processor 580 of the electronic device 501. The instructions may be stored in, for example, a computer-readable recording medium or the memory 530 of the electronic device 501 illustrated in FIG. 5. Below, the reference numerals of FIG. 5 may be used to describe operation 1001 to operation 1011, and a description repeated with respect to FIGS. 6 and 8 may be omitted.

In operation 1001, the processor 580 of the electronic device 501 may execute or launch a payment application. A GUI for a payment transaction may be output in the display 520 by the execution of the payment application.

In operation 1003, the processor 580 may detect a predetermined event. For example, the predetermined event may include a user input through a GUI output to the display 520, the successful authentication (e.g., fingerprint authentication, PIN authentication, face authentication, voice authentication, or the like) of the user, or an input for a specified physical key or soft key.

In operation 1005, the processor 580 may initiate the wireless transmission of payment data to the external device 502, by using the payment module 570. The wireless transmission may include the transmission using an NFC wireless channel, an MST wireless channel, or the like.

In operation 1007, the processor 580 may receive the completion message of the payment transaction from an external device 502 or a payment server. For example, the processor 580 may receive the completion message of the payment transaction from the external device 502 through the payment module 570. For another example, the processor 580 may receive the completion message of the payment transaction from a payment server (e.g., a payment processing server of a card issuer and/or a financial institution) through the communication circuit 540.

For example, the completion message of the payment transaction may include the identification information (including the merchant name of the external device 502, the serial number of the external device 502, or the like) of the external device 502 making the payment transaction; additionally or selectively, the completion message of the payment transaction may additionally include the transaction amount of the payment transaction or the transaction time of the payment transaction.

In operation 1009, the processor 580 may determine an optically recognizable image based on identification information (including a merchant name of the external device 502, or the like) of the external device 502 included in the completion message of the payment transaction. In other words, the processor 580 may determine a merchant to which the external device 502 belongs, from the identification information of the external device 502 included in the completion message. The processor 580 may determine the optically recognizable image corresponding to the determined merchant. For example, when the processor 580 determines that the external device 502 has been installed in a mart 'A', based on information included in the completion message, the processor 580 may determine that a bar code including discount information corresponding to the mart 'A' is an image to be output to the display 520.

In operation 1011, the processor 580 may output the determined image to the display 520. For example, the determined image may be optically recognized by the reader (e.g., a bar code reader) of the external device 502.

According to an embodiment described in FIG. 10, after the payment transaction between the electronic device 501 and the external device 502, the optically recognizable image including discount information or the like may be output to the display 520. In this case, the electronic device 501 may determine (or specify) the optically recognizable image based on the completion message of the payment transaction and may output the determined image to the display 520. As such, even though a user performs additional manipulation for determining the optically recognizable image, the user may receive an additional discount service, a loyalty service, or the like, which is to be used for the corresponding payment transaction.

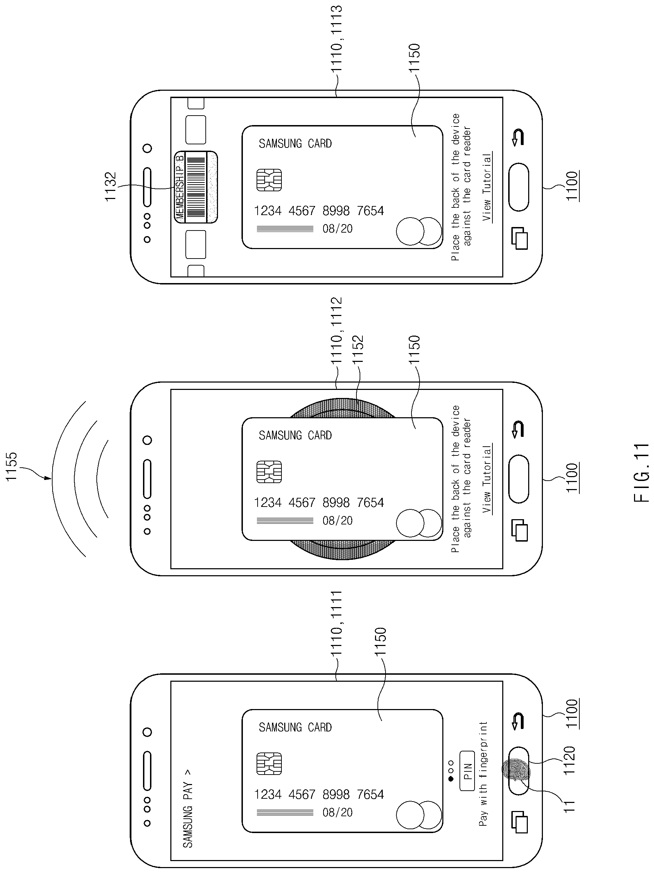

FIG. 11 is a view for describing a payment method in which an optically recognizable image is determined automatically, according to an embodiment.

Referring to FIG. 11, an electronic device 1100 that performs a payment method is illustrated. For example, the electronic device 1100 may correspond to the electronic device 501 of FIG. 5. The description repeated with respect to FIGS. 7 and 9 may be omitted.

According to an embodiment, the electronic device 1100 may output a GUI screen 1111 for the payment transaction to a display 1110 based on the execution or launch of the payment application (e.g., "Samsung Pay™"). For example, the screen 1111 may include an image object 1150 of a credit card. The image object 1150 of the credit card may be linked to the payment data of the corresponding credit card and may be switched to an image object of another credit card in response to an additional user input (e.g., horizontal scrolling) (not illustrated).

According to an embodiment, a user may perform a fingerprint input 11 by using a home button 1120 including a fingerprint sensor. The electronic device 1100 may authenticate a user based on the fingerprint input 11. When the user is successfully authenticated, the electronic device 1100 may detect the corresponding authentication as an event associated with payment initiation. When the user is authenticated, that is, when the event associated with payment initiation is detected, the electronic device 1100 may output a GUI screen 1112 to the display 1110.

Referring to the screen 1112, the electronic device 1100 may generate a wireless channel 1155 (e.g., the electromagnetic field by an NFC module, the magnetic field by an MST module) and may transmit payment data to an external device (e.g., a POS terminal) through the wireless channel 1155, in response to the event associated with the payment initiation. At this time, the electronic device 1100 may output a graphic indicator 1152 indicating the transmission of the payment data linked to the image object 1150 of the credit card, to the display 1110. The external device may complete a payment transaction by communicating with a payment server or the like, based on the payment data received from the electronic device 1100.

When the payment is completed, the electronic device 1100 may receive the completion message of the payment transaction from the external device or the payment server. For example, the completion message of the payment transaction may include the identification information (including the merchant name of an external device, the serial number of an external device, or the like) of an external device performing the payment transaction; additionally or selectively, the completion message of the payment transaction may additionally include the transaction amount of the payment transaction or the transaction time of the payment transaction.

Referring to a screen 1113, the electronic device 1100 may select a bar code 'B' 1132 associated with a membership 'B' based on the identification information of an external device included in the completion message, and may output the bar code 'B' 1132 to the display 1110. For example, the electronic device 1100 may verify a merchant 'B', to which the external device belongs, based on the identification information of the external device included in the completion message and may determine the bar code 'B' 1132 (of the membership 'B') corresponding to the merchant 'B'. For example, the external device belonging to the merchant 'B' may recognize the bar code 'B' 1132 by using a bar code reader and may provide a service associated with the membership 'B'.

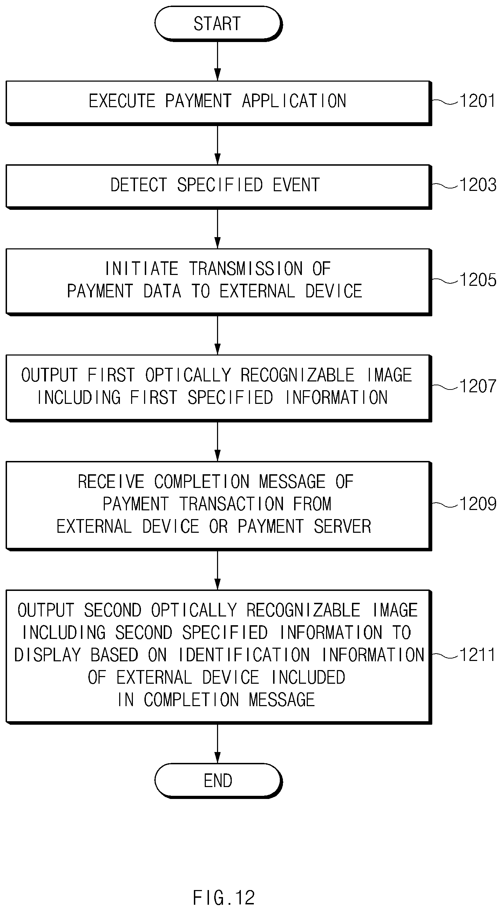

FIG. 12 is a flowchart illustrating a payment method of recommending an optically recognizable image automatically, according to an embodiment.

Referring to FIG. 12, the payment method according to an embodiment may include operation 1201 to operation 1211. Operation 1201 to operation 1211 may be executed by, for example, the electronic device 501 illustrated in FIG. 5. Operation 1201 to operation 1211 may be respectively implemented with, for example, instructions capable of being performed (or executed) by the processor 580 of the electronic device 501. The instructions may be stored in, for example, a computer-readable recording medium or the memory 530 of the electronic device 501 illustrated in FIG. 5. Below, the reference numerals of FIG. 5 may be used to describe operation 1201 to operation 1211, and a description repeated with respect to FIGS. 6, 8, and 10 may be omitted.

In operation 1201, the processor 580 of the electronic device 501 may execute or launch a payment application. A GUI for a payment transaction may be output in the display 520 by the execution of the payment application.

In operation 1203, the processor 580 may detect a predetermined event. For example, the predetermined event may include a user input through a GUI output to the display 520, the successful authentication (e.g., fingerprint authentication, PIN authentication, face authentication, voice authentication, or the like) of the user, or an input for a specified physical key or soft key.

In operation 1205, the processor 580 may initiate the wireless transmission of payment data to the external device 502, by using the payment module 570. The wireless transmission may include the transmission using an NFC wireless channel, an MST wireless channel, or the like.

In operation 1207, the processor 580 may output a first optically recognizable image including first specified information to the display 520. The first image may be determined (or selected) based on a user input or may be selected in advance. For another example, the first image may be correlated to the payment data in advance.

In operation 1209, the processor 580 may receive the completion message of the payment transaction from an external device 502 or a payment server. For example, the completion message of the payment transaction may include the transaction amount of the payment transaction, the transaction time of the payment transaction, and/or identification information (including the merchant name of the external device 502, or the like) of the external device 502 performing the payment transaction.

In operation 1211, the processor 580 may output the second optically recognizable image based on identification information (including a merchant name of the external device 502, or the like) of the external device 502 included in the completion message of the payment transaction, to the display 520. In other words, the processor 580 may determine a merchant to which the external device 502 belongs, from the identification information of the external device 502 included in the completion message. The processor 580 may output the second optically recognizable image corresponding to the determined merchant, to the display 520.

According to various embodiments, when the second image is not stored in the memory 530, in the operation 1211, the processor 580 may provide a notice that allows a user to download the second image and/or a download path. The user may download the second image with reference to the notice and/or the download path and may receive a service corresponding to the second image.

According to an embodiment illustrated in FIG. 12, at the payment transaction between the electronic device 501 and the external device 502, the first image may be output to the display 520; after the payment transaction is completed, the second image may be additionally output to the display 520. As such, the user may receive an additional discount service, a loyalty service, or the like from the electronic device 501 without forgetting.

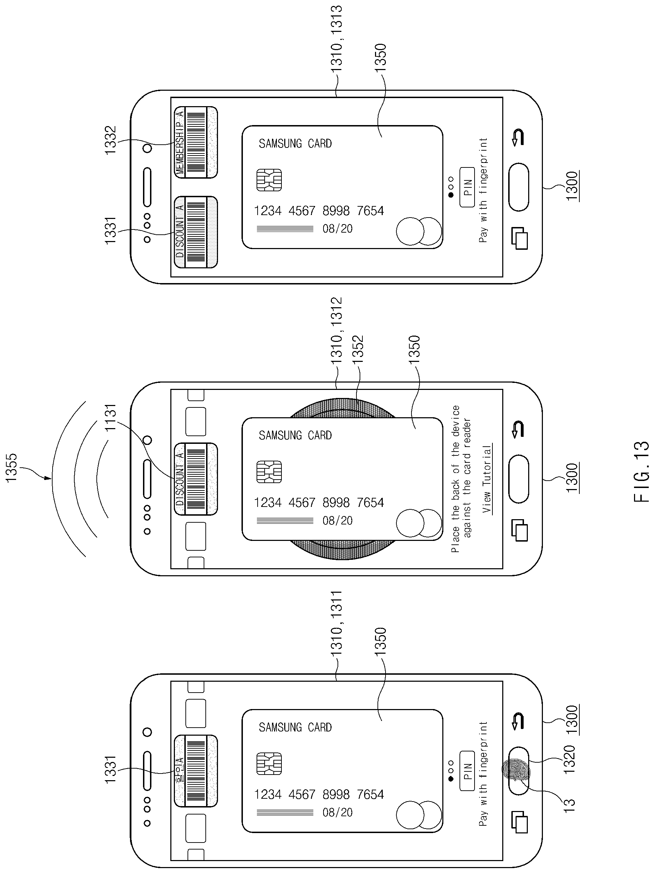

FIG. 13 is a view for describing a payment method of recommending an optically recognizable image automatically, according to an embodiment.

Referring to FIG. 13, an electronic device 1300 that performs a payment method is illustrated. For example, the electronic device 1300 may correspond to the electronic device 501 of FIG. 5. The description repeated with respect to FIGS. 7, 9, and 11 may be omitted.

According to an embodiment, the electronic device 1300 may output a GUI screen 1311 for the payment transaction to a display 1310 based on the execution or launch of the payment application (e.g., "Samsung Pay™"). For example, the screen 1311 may include an image object 1350 of a credit card and a first bar code 1331 associated with discount 'A'. The image object 1350 of the credit card may be linked to the payment data of the corresponding credit card and may be switched to an image object of another credit card in response to an additional user input (e.g., horizontal scrolling) (not illustrated).

According to an embodiment, a user may perform a fingerprint input 13 by using a home button 1320 including a fingerprint sensor. The electronic device 1300 may authenticate a user based on the fingerprint input 13. When the user is successfully authenticated, the electronic device 1300 may detect the corresponding authentication as an event associated with payment initiation. When the user is authenticated, that is, when the event associated with payment initiation is detected, the electronic device 1300 may output a GUI screen 1312 to the display 1310.

Referring to the screen 1312, the electronic device 1300 may generate a wireless channel 1355 (e.g., the electromagnetic field by an NFC module, the magnetic field by an MST module) and may transmit payment data to an external device (e.g., a POS terminal) through the wireless channel 1355, in response to the event associated with the payment initiation. At this time, the electronic device 1300 may output a graphic indicator 1352 indicating the transmission of the payment data linked to the image object 1350 of the credit card, to the display 1310. The external device may complete a payment transaction by communicating with a payment server or the like, based on the payment data received from the electronic device 1300.

According to an embodiment, before the transmission initiation of the payment data or before the payment completion, the first bar code 1331 included in the screen 1312 may be recognized by a bar code reader included in an external device. As such, the external device may provide the user with the service associated with discount 'A' based on the first bar code 1331.

When the payment transaction is completed, the electronic device 1300 may receive the completion message of the payment transaction from the external device or the payment server. For example, the completion message of the payment transaction may include the identification information (including the merchant name of an external device, the serial number of an external device, or the like) of an external device performing the payment transaction; additionally or selectively, the completion message of the payment transaction may additionally include the transaction amount of the payment transaction or the transaction time of the payment transaction.

Referring to a screen 1313, the electronic device 1300 may select a second bar code 1332 associated with a membership 'A' based on the identification information of an external device included in the completion message, and may output the second bar code 1332 to the display 1310. For example, the electronic device 1300 may verify a merchant 'A' to which the external device belongs, based on identification information of the external device included in the completion message of the payment transaction and may determine (or recommend) the second bar code 1332 associated with the membership 'A' corresponding to the merchant 'A'. Accordingly, for example, the external device belonging to the merchant 'A' may additionally recognize the second bar code 1332 associated with the membership 'A' through a bar code reader, and thus may provide a service associated with membership 'A' in addition to the discount 'A'.

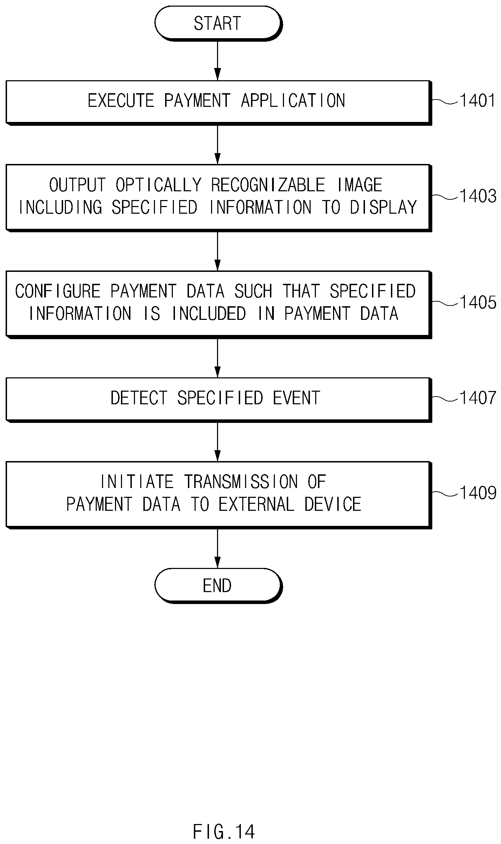

FIG. 14 is a flowchart illustrating a payment method in which an optically recognizable image is included in payment data, according to an embodiment.

Referring to FIG. 14, a payment method according to an embodiment may include operation 1401 to 1409. Operation 1401 to operation 1409 may be performed by, for example, the electronic device 501 illustrated in FIG. 5. Operation 1401 to operation 1409 may be respectively implemented with, for example, instructions capable of being performed (or executed) by the processor 580 of the electronic device 501. The instructions may be stored in, for example, a computer-readable recording medium or the memory 530 of the electronic device 501 illustrated in FIG. 5. Below, the reference numerals of FIG. 5 may be used to describe operation 1401 to operation 1409, and a description repeated with respect to FIGS. 6 to 13 may be omitted.

In operation 1401, the processor 580 of the electronic device 501 may execute or launch a payment application. A GUI for a payment transaction may be output in the display 520 by the execution of the payment application.

In operation 1403, the processor 580 may output an optically recognizable image including specified information to the display 520. For example, the optically recognizable image may include a one-dimensional bar code, a two-dimensional code, or a QR code. The specified information included in the optically recognizable image may include at least one of discount information, loyalty information, or member information.

In operation 1405, the processor 580 may configure the payment data such that the specified information is included in the payment data. For example, information included in the optically recognizable image may be included in a discretionary field of the payment data.

In operation 1407, the processor 580 may detect a predetermined event. For example, the predetermined event may include a user input through a GUI output to the display 520, the successful authentication (e.g., fingerprint authentication, PIN authentication, face authentication, voice authentication, or the like) of the user, or an input for a specified physical key or soft key.

In operation 1409, the processor 580 may wirelessly transmit payment data including the specified information to the external device 502 by using the payment module 570. The wireless transmission may include the transmission using an NFC wireless channel, an MST wireless channel, or the like.

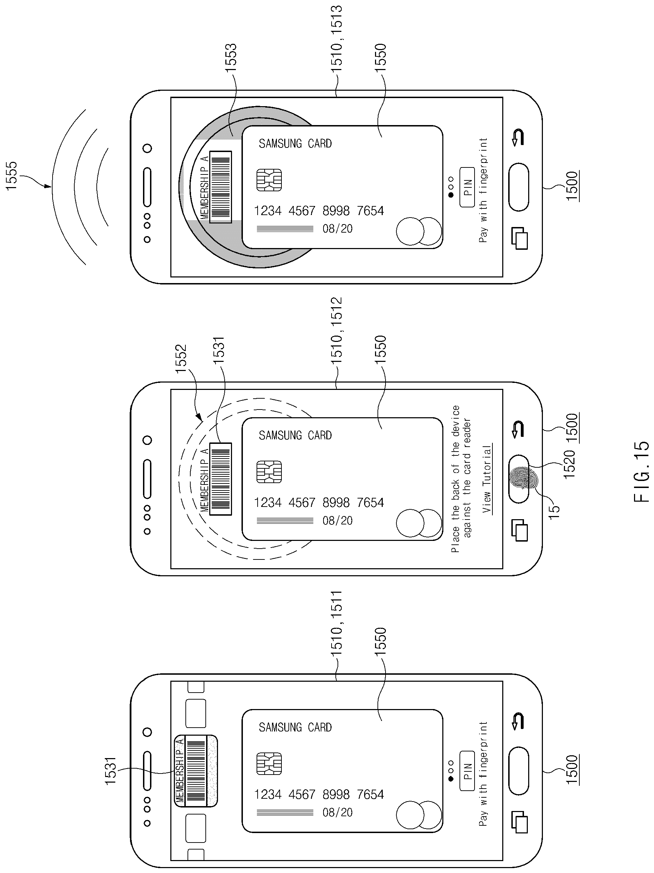

FIG. 15 is a view for describing a payment method in which an optically recognizable image is included in payment data, according to an embodiment.

Referring to FIG. 15, an electronic device 1500 that performs a payment method is illustrated. For example, the electronic device 1500 may correspond to the electronic device 501 of FIG. 5. The description repeated with respect to FIGS. 7, 9, 11, and 13 may be omitted.

According to an embodiment, the electronic device 1500 may output a GUI screen 1511 for the payment transaction to a display 1510 based on the execution or launch of the payment application (e.g., "Samsung Pay™"). For example, the screen 1511 may include an image object 1550 of a credit card and a bar code 'A' 1531 associated with a membership 'A'. The image object 1550 of the credit card may be linked to the payment data of the corresponding credit card and may be switched to an image object of another credit card in response to an additional user input (e.g., horizontal scrolling) (not illustrated).

Referring to a screen 1512, the electronic device 1500 may configure the payment data such that information about the membership 'A' is included in the payment data. For example, the information about the membership 'A' may be included in the discretionary field of the payment data. At this time, the electronic device 1500 may output a graphic indicator 1552 indicating that the information about the membership 'A' corresponding to the bar code 'A' 1531 has been included in the payment data, to the display 1510. For example, the electronic device 1500 may interact with a server of a merchant 'A' managing the information about the membership, and thus the information about the membership 'A' may be obtained in advance.

According to an embodiment, a user may perform a fingerprint input 15 by using a home button 1520 including a fingerprint sensor. The electronic device 1500 may authenticate a user based on the fingerprint input 15. When the user is successfully authenticated, the electronic device 1500 may detect the corresponding authentication as an event associated with payment initiation. When the user is authenticated, that is, when the event associated with payment initiation is detected, the electronic device 1500 may output a GUI screen 1513 to the display 1510.

Referring to the screen 1513, the electronic device 1500 may generate a wireless channel 1555 (e.g., the electromagnetic field by an NFC module, the magnetic field by an MST module) and may transmit payment data to an external device (e.g., a POS terminal) through the wireless channel 1555, in response to the event associated with the payment initiation. At this time, the electronic device 1500 may output a graphic indicator 1553 indicating the transmission of the payment data linked to the image object 1550 of the credit card, to the display 1510. The external device may complete a payment transaction by communicating with a payment server or the like, based on the payment data received from the electronic device 1500.

According to an embodiment, an electronic device may include a display, a payment module transmitting data associated with a payment transaction to an external device wirelessly, a processor electrically connected to the display and the payment module, and a memory electrically connected to the processor. The memory may store instructions that cause the processor to initiate transmission of payment data to the external device, in response to a predetermined event and to output an optically recognizable image including specified information to the display.

According to an embodiment, the payment module may include at least one of a near field communication (NFC) module, a magnetic secure transmission module, or a magnetic stripe transmission module.

According to an embodiment, the optically recognizable image may include a one-dimensional bar code, a two-dimensional bar code, or a quick response (QR) code.

According to an embodiment, the specified information may include at least one of offer information, loyalty information, membership information, or member information.

According to an embodiment, the external device may include a device equipped with a module for wirelessly receiving the data associated with the payment transaction from the electronic device.

According to an embodiment, the instructions may further cause the processor to extend a transmission duration of the payment data by a specified time, when the optically recognizable image is output.

According to an embodiment, the instructions may further cause the processor to extend a transmission duration of the payment data by a specified time, when a user input for the optically recognizable image is sensed.

According to an embodiment, the electronic device may further include a communication circuit establishing communication with a server managing the specified information. The instructions may further cause the processor to extend a transmission duration of the payment data by a specified time, when an acknowledgement message of the specified information is received from the server.

According to an embodiment, the optically recognizable image may be determined based on a user input.

According to an embodiment, the instructions may further cause the processor to receive a completion message of the payment transaction from the external device or a payment server and determine the optically recognizable image based on identification information of the external device included in the completion message.

According to an embodiment, the instructions may further cause the processor to receive a completion message of the payment transaction from the external device or a payment server and further to output another optically recognizable image to the display based on identification information of the external device included in the completion message.

According to an embodiment, the instructions may further cause the processor to configure the payment data such that the specified information is included in the payment data.

According to an embodiment, a payment method of an electronic device may include initiating a wireless transmission of payment data to an external device, in response to a predetermined event and outputting an optically recognizable image including specified information to a display.

According to an embodiment, the payment method may further include extending the transmission duration of the payment data by a specified time, when the optically recognizable image is output.

According to an embodiment, the payment method may further include extending the transmission duration of the payment data by a specified time, when a user input for the optically recognizable image is sensed.

According to an embodiment, the payment method may further include extending the transmission duration of the payment data by a specified time, when an ACK message is received from a server managing the specified information.

According to an embodiment, the payment method may further include receiving a completion message of a payment transaction from the external device or a payment server and determining the optically recognizable image based on identification information of the external device included in the completion message.

According to an embodiment, the payment method may further include receiving a completion message of a payment transaction from the external device or a payment server and further outputting another optically recognizable image to the display based on identification information of the external device included in the completion message.

According to an embodiment, the payment method may further include configuring the payment data such that the specified information is included in the payment data.

According to an embodiment, a computer-readable recording medium may store instructions that, when executed by at least one processor, cause the processor to initiate a wireless transmission of payment data to an external device, in response to a predetermined event and to output an optically recognizable image including specified information to a display.

The term "module" used in the present disclosure may represent, for example, a unit including one or more combinations of hardware, software and firmware. The term "module" may be interchangeably used with the terms "unit", "logic", "logical block", "part" and "circuit". The "module" may be a minimum unit of an integrated part or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 120), may cause the one or more processors to perform a function corresponding to the instruction. The computer-readable storage media, for example, may be the memory 130.

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random access memory (RAM), or a flash memory). Also, the one or more instructions may contain a code made by a compiler or a code executable by an interpreter. The above hardware unit may be configured to operate via one or more software modules for performing an operation according to various embodiments, and vice versa.

A module or a program module according to various embodiments may include at least one of the above components, or a part of the above components may be omitted, or additional other components may be further included. Operations performed by a module, a program module, or other components according to various embodiments may be executed sequentially, in parallel, repeatedly, or in a heuristic method. In addition, some operations may be executed in different sequences or may be omitted. Alternatively, other operations may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a display;
a payment module configured to transmit data associated with a payment transaction to an external device wirelessly;
a processor electrically connected to the display and the payment module; and
a memory electrically connected to the processor,
wherein the memory stores instructions that cause the processor to:
initiate transmission of payment data to the external device, in response to a predetermined event; and
output an optically recognizable image including specified information to the display.

2. The electronic device of claim 1, wherein the payment module includes at least one of a near field communication (NFC) module, a magnetic secure transmission module, or a magnetic stripe transmission module.

3. The electronic device of claim 1, wherein the optically recognizable image includes a one-dimensional bar code, a two-dimensional bar code, or a quick response (QR) code.

4. The electronic device of claim 1, wherein the specified information includes at least one of offer information, loyalty information, membership information, or member information.

5. The electronic device of claim 1, wherein the external device includes a device equipped with a module for wirelessly receiving the data associated with the payment transaction from the electronic device.

6. The electronic device of claim 1, wherein the instructions further cause the processor to:
extend a transmission duration of the payment data by a specified time, when the optically recognizable image is output.

7. The electronic device of claim 1, wherein the instructions further cause the processor to:
extend a transmission duration of the payment data by a specified time, when a user input for the optically recognizable image is sensed.

8. The electronic device of claim 1, further comprising:
a communication circuit configured to establish communication with a server managing the specified information,
wherein the instructions further cause the processor to:
extend a transmission duration of the payment data by a specified time, when an acknowledgement message of the specified information is received from the server.

9. The electronic device of claim 1, wherein the optically recognizable image is determined based on a user input.

10. The electronic device of claim 1, wherein the instructions further cause the processor to:
receive a completion message of the payment transaction from the external device or a payment server; and
determine the optically recognizable image based on identification information of the external device included in the completion message.

11. The electronic device of claim 1, wherein the instructions further cause the processor to:
receive a completion message of the payment transaction from the external device or a payment server; and
further output another optically recognizable image to the display based on identification information of the external device included in the completion message.

12. The electronic device of claim 1, wherein the instructions further cause the processor to:
configure the payment data such that the specified information is included in the payment data.

13. A payment method of an electronic device, the method comprising:
initiating a wireless transmission of payment data to an external device, in response to a predetermined event; and
outputting an optically recognizable image including specified information to a display.

14. The method of claim 13, further comprising:
receiving a completion message of a payment transaction from the external device or a payment server; and
further outputting another optically recognizable image to the display based on identification information of the external device included in the completion message.

15. The method of claim 13, further comprising:
configuring the payment data such that the specified information is included in the payment data.
